(19) **Europäisches Patentamt European Patent Office Office européen des brevets**

(11) **EP 1 840 582 B1**

(12) **FASCICULE DE BREVET EUROPEEN**

(45) Date de publication et mention
de la délivrance du brevet:
**09.12.2009 Bulletin 2009/50**

(51) Int Cl.:
*G01P 15/10* *(2006.01)*

(21) Numéro de dépôt: **07104737.7**

(22) Date de dépôt: **23.03.2007**

(54) **Micro-capteur inertiel résonant à épaisseur variable réalisé en technologies de surface**

Resonanter Trägheitsmikrosensor variabler Dicke, der im Bereich der Oberflächentechnologien eingesetzt wird

Resonating inertial micro-sensor with variable thickness made using surface technologies

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **27.03.2006 FR 0651053**

(43) Date de publication de la demande:
**03.10.2007 Bulletin 2007/40**

(73) Titulaire: **COMMISSARIAT A L'ENERGIE ATOMIQUE**
**75015 Paris (FR)**

(72) Inventeurs:
• **Robert, Philippe**
**38100, GRENOBLE (FR)**
• **Duraffour, Laurent**
**38500, VOIRON (FR)**

(74) Mandataire: **Poulin, Gérard**
**Société BREVATOME**
**3, rue du Docteur Lancereaux**
**75008 Paris (FR)**

(56) Documents cités:
**FR-A1- 2 763 694    FR-A1- 2 784 752**
**FR-A1- 2 874 257**

• **AIKELE M ET AL: "Resonant accelerometer with self-test" SENSORS AND ACTUATORS A, ELSEVIER SEQUOIA S.A., LAUSANNE, CH, vol. 92, no. 1-3, 1 août 2001 (2001-08-01), pages 161-167, XP004274041 ISSN: 0924-4247**
• **CHRISTOFER HIEROLD ET AL: "From micro- to nanosystems: mechanical sensors go nano" JOURNAL OF MICROMECHANICS & MICROENGINEERING, INSTITUTE OF PHYSICS PUBLISHING, BRISTOL, GB, vol. 14, no. 9, 1 septembre 2004 (2004-09-01), pages S1-S11, XP020069754 ISSN: 0960-1317**

## Description

## DOMAINE TECHNIQUE ET ART ANTÉRIEUR

L'invention concerne le domaine des micro-capteurs, notamment en silicium, par exemple les capteurs inertiels, notamment accéléromètres ou gyromètres.

Elle trouve application dans des domaines variés, tels que l'automobile, la téléphonie mobile ou l'avionique.

De manière connue, les capteurs résonants peuvent être réalisés :

- Soit en technologie de volume, auquel cas l'élément sensible du capteur est réalisé sur toute l'épaisseur d'un substrat en silicium ou en quartz, en utilisant des gravures humides ; une telle technique est décrite dans le document FR 2 763 694.

- Soit en technologie de surface : cette technique est décrite dans le document « Resonant accelerometer with self test », de M.Aikele et al., Sensors and Actuators, A92, 2001, p. 161-167.

Les capteurs inertiels réalisés en technologie de volume sont basés sur une excitation électrostatique hors plan du résonateur. De ce fait ils nécessitent le report de 2 substrats, dont l'un sert à réaliser la (ou les) électrode(s) d'excitation/détection et le second sert à fermer la cavité sous vide. Les technologies mises en jeu sont donc lourdes.

De plus le résonateur a alors une épaisseur différente de la masse sismique. Cet amincissement est, entre autre, rendu nécessaire par le mode de vibration de la poutre qui se fait hors plan.

Un autre problème de ce type de technique réside dans le positionnement du résonateur, qui ne peut pas être optimisé pour augmenter l'effet de bras de levier. En effet, afin de minimiser l'entrefer entre le résonateur et son électrode d'excitation, le résonateur est placé en surface du substrat. De manière optimum, le résonateur devrait se situer le plus près possible de la charnière (axe de rotation de la masse).

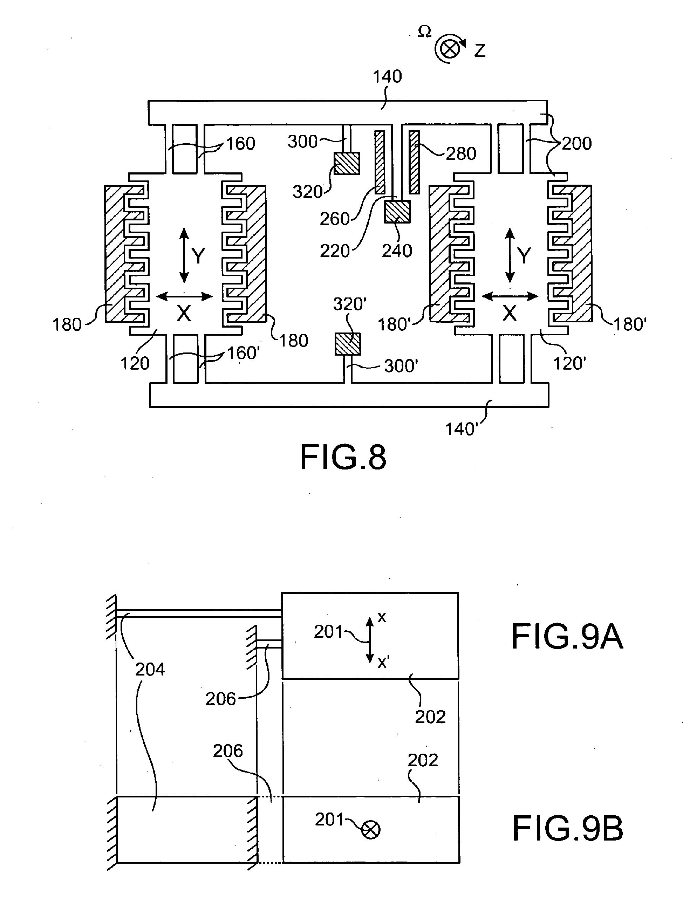

Dans un capteur inertiel réalisé en technologie de surface le résonateur vibre dans un plan. Le principe d'un capteur inertiel selon l'art antérieur est illustré sur les figures 9A et 9B, respectivement en vue de dessus et en vue en coupe.

Sur ces figures, un axe XX' 201 est l'axe sensible du capteur. Les références 202, 204, 206 désignent respectivement une masse sismique, un résonateur, et une charnière. La vue en coupe montre que la masse 202 et le résonateur 204 ont une même épaisseur.

L'élément sensible 202 a une surface (en vue de dessus) de l'ordre du $mm^2$.

Or, dans de multiples applications, et notamment des applications grand public comme l'automobile ou la téléphonie mobile, où la demande en capteurs est croissante, la miniaturisation des composants reste un enjeu important, du fait en particulier de la course à la réduction du prix, à l'accroissement des fonctionnalités (nombre de capteurs de plus en plus important), à l'intégration avec l'électronique de traitement et à la réduction de la consommation.

Il faut donc trouver une nouvelle conception de composants, encore plus miniaturisés, de masse encore plus faible que ceux connus actuellement, présentant un encombrement, pour les accéléromètres, de préférence inférieur à 0,1 $mm^2$ ou même à 0,01 $mm^2$.

De même, toujours aux fins de miniaturisation, on cherche à associer électronique et MEMS et/ou NEMS sur un même substrat. Pour cette association, deux options existent.

Une première approche, dite « Above IC» (ou AIC), consiste à reporter le MEMS sur le circuit MOS une fois réalisé. Le MEMS est dans ce cas réalisé par couches déposées. Les performances métrologiques des capteurs ainsi réalisés sont alors assez limitées, puisque les qualités mécaniques des matériaux déposés sont assez faibles au regard de ce que l'on a en utilisant le Si monocristallin.

L'approche « In IC » consiste à réaliser le MEMS au même niveau que les circuits CMOS. Dans ce cas, il est possible d'avoir accès au Si monocristallin pour réaliser le MEMS et ainsi obtenir de bonnes performances.

Pour des capteurs de classe $10^{-2}$ (et au-delà), il parait illusoire d'obtenir le niveau de performance requis par une technologie AIC dans les dimensions visées. L'approche « In-IC » apparaît à ce titre beaucoup plus prometteuse. Cette approche n'a cependant de sens que si l'on dispose d'une miniaturisation suffisamment poussée des structures mécaniques. En effet, pour rendre cette intégration réaliste d'un point de vue économique il convient de minimiser au maximum la surface de silicium occupée par le capteur au profit des circuits CMOS. On estime à environ 0.05$mm^2$ l'encombrement maximum à ne pas dépasser pour un accéléromètre de ce type. A titre de comparaison, la surface classique de l'élément sensible d'un accéléromètre MEMS (de classe $10^{-2}$ ou de gamme de mesure 10G) descend rarement en dessous de 0.5$mm^2$ (sans tenir compte des plots de contact). Pour un gyroscope MEMS, la surface usuelle de l'élément sensible est de plus de 20 $mm^2$.

D'une manière générale, quel que soit le type de capteur inertiel, la miniaturisation par simple réduction homothétique des dimensions se traduit inexorablement par une perte de sensibilité significative. C'est ce qu'indique l'article de C.Hérold, Journal of Micromechanics and Microengineering, Vol.14, S1 - S11, Vol.14, 2004, "from micro- to nanosytems: mechanical sensors go nano".

Autrement dit, la miniaturisation homothétique se traduit par une « rigidification relative » de la structure mécanique par rapport aux forces d'inertie.

Il se pose donc, outre le problème de trouver une nouvelle conception de composants, encore plus miniaturisés, celui de devoir pallier cette baisse significative de sensibilité qui accompagne toute réduction de la taille des composants.

**EXPOSÉ DE L'INVENTION**

Pour résoudre ces problèmes, l'invention propose de réaliser des capteurs MEMS à détection par résonateur utilisant une technologie planaire « 3D ».

L'invention concerne un capteur résonant MEMS en technologie de surface et à excitation du résonateur dans un plan, à épaisseurs multiples. C'est par exemple un accéléromètre ou un gyromètre. Typiquement on peut avoir 2 épaisseurs différentes sur le même composant, mais aussi plus de deux épaisseurs, par exemple trois.

Une première zone épaisse, présente une première épaisseur, et est utilisée pour la partie masse sismique, par exemple d'un accéléromètre ou d'un gyromètre. Une seconde zone, mince, a une deuxième épaisseur inférieure à la première. Le rapport entre ces deux épaisseurs est par exemple compris entre 2 et 10. La seconde zone est utilisée pour la détection et éventuellement pour la réalisation des charnières (ou d'un axe de torsion dans le cas d'un gyroscope).

Selon l'invention, on modifie le design des capteurs résonants réalisés en technologie de surface en décorrélant la partie masse sismique de la partie détection.

La première zone présente de préférence une surface S inférieure à 0,1 mm$^2$ pour un accéléromètre, et inférieure à 5 mm$^2$ pour un gyromètre.

La première et la deuxième zone peuvent être formées dans la couche superficielle de semi-conducteur d'un substrat SOI.

Un capteur selon l'invention peut en outre comporter une troisième zone formant charnière (ou un axe de torsion dans le cas d'un gyromètre), cette troisième zone ayant une épaisseur comprise entre celle de la première zone et celle de la deuxième zone, ou égale à celle de la première zone, ou égale à celle de la deuxième zone.

L'invention permet d'optimiser différentes parties du capteur séparément:

- le (les) résonateur(s),
- la (les) charnière(s), ou l'axe de torsion,
- la (les) masse(s) sismique(s).

Elle est en outre compatible avec une approche « In-IC » à très bas coût.

Des butées mécaniques peuvent être prévues, afin de limiter le déplacement de la masse sismique.

Des moyens numériques de détection peuvent en outre être prévus, par exemple comportant des moyens de filtrage numérique et/ou de traitement numérique du signal.

L'invention concerne en outre un procédé de réalisation d'un dispositif selon l'invention, mettant en oeuvre des étapes de gravure différenciées, en profondeur, perpendiculairement à un plan de la masse sismique, des première et/ou deuxième et/ou troisièmes zones.

L'invention concerne en particulier un procédé de réalisation d'un capteur résonant MEMS, du type de surface, comportant un résonateur à excitation dans le plan, ce procédé comportant :

- la formation d'une zone épaisse, présentant une première épaisseur ($E_1$), formant masse sismique,
- la formation d'une zone mince, présentant une deuxième épaisseur ($E_2$), inférieure à la première, pour la détection.

La zone épaisse et la zone mince peuvent être formées par gravure d'une couche de matériau semi-conducteur, suivant 3 dimensions.

Elles peuvent être formée par gravure d'une couche superficielle de matériau semi-conducteur d'un substrat SOI, suivant une direction (z) perpendiculaire à un plan principal de ce substrat SOI.

Un tel procédé peut en outre comporter la formation d'une troisième zone, dite zone charnière ou axe de torsion, d'épaisseur comprise entre celle de la première zone et celle de la deuxième zone, ou égale à l'une des épaisseurs de ces deux zones.

Avantageusement, la zone mince est réalisée dans une couche superficielle de semi-conducteur, la zone épaisse étant réalisée dans une couche de semi-conducteur épitaxiée sur ladite couche superficielle et dans cette couche superficielle.

**BRÈVE DESCRIPTION DES DESSINS**

- Les figures 1A et 1B représentent, respectivement en vue de dessus et en vue de côté, un capteur inertiel selon l'invention.
- La figure 1C représente, en vue de dessus, un capteur inertiel selon l'invention avec une autre disposition des éléments dans un plan.
- La figure 1D représente, en vue de dessus, un dispositif selon l'invention, avec deux capteurs inertiels selon l'invention montés en différentiel.
- Les figures 2A - 2G et 3A - 3F représentent un premier mode de réalisation d'un procédé selon l'invention,
- Les figures 4A - 4F et 5A - 5E représentent un deuxième mode de réalisation d'un procédé selon l'invention.
- Les figures 6A - 6E et 7A - 7E représentent un troisième mode de réalisation d'un procédé selon l'invention.

- La figure 8 représente un gyromètre.
- Les figures 9A et 9B représentent, respectivement en vue de dessus et en vue de côté, un capteur inertiel selon l'art antérieur.

## EXPOSÉ DÉTAILLÉ DE MODES DE RÉALISATION PARTICULIERS

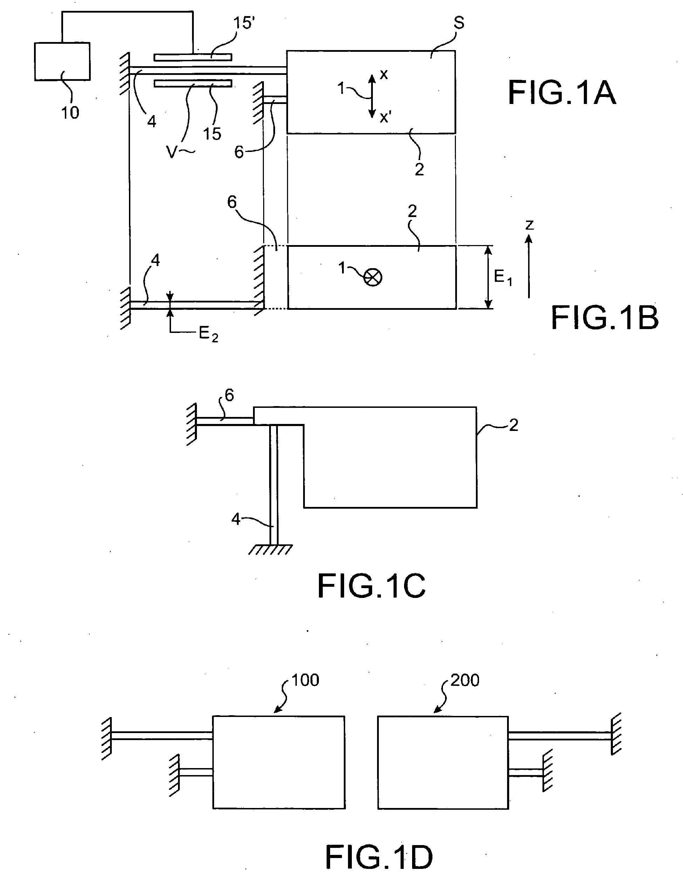

Un exemple de capteur inertiel résonant 100 selon l'invention va être décrit en liaison avec les figures 1A et 1B. Un tel capteur 100 peut être par exemple un accéléromètre ou un gyromètre. Il s'agit d'un capteur en technologie de surface et à excitation du résonateur dans un plan.

Sur ces figures, un axe XX' 1 est l'axe sensible du capteur. Les références 2, 4 désignent respectivement une masse sismique, un résonateur. La référence 6 désigne une charnière dans le cas d'un accéléromètre et un axe de torsion dans le cas d'un gyromètre (un gyromètre est décrit plus loin en liaison avec la figure 8). La vue en coupe (figure 1B) montre que la masse 2 et le résonateur 4 n'ont pas la même épaisseur : la masse 2 a une première épaisseur $E_1$, par exemple de l'ordre du $\mu$m, supérieure à l'épaisseur $E_2$ du résonateur. Le rapport $E_1/E_2$ est par exemple compris entre 2 et 10.

La charnière permet de maintenir la masse sismique dans un même plan, celui de la figure 1A ou encore celui défini par la masse sismique 2 dont les dimensions dans le plan de la figure 1A sont nettement plus importantes que dans une direction perpendiculaire à ce plan. La charnière a une épaisseur $E_3$ qui peut être égale à $E_1$, ou à $E_2$, ou comprise entre $E_1$ et $E_2$. Comme on le voit sur la figure 1A, la charnière 6 et le résonateur 4 sont réalisés parallèlement à un plan défini par la masse sismique 2, mais (figure 1B) à des profondeurs différentes suivant une direction z sensiblement perpendiculaire au plan de la masse 2. La charnière 6 n'est pas nécessairement parallèle à la portion résonante 4 ; elle peut être disposée autrement, par exemple comme illustré sur la figure 1C sur laquelle des références identiques à celles des figures 1A et 1B désignent des éléments identiques ou correspondants. Sur cette figure 1C, qui représente un dispositif selon l'invention en vue de dessus, la charnière est sensiblement perpendiculaire au résonateur. Dans le plan des figures, des dispositions autres que celles des figures 1A-1B et 1C peuvent être réalisées.

La référence 10 (figure 1A) désigne des moyens de traitement numérique d'un signal provenant du système 100. Ces moyens peuvent être utilisés dans les modes de réalisation illustrés sur les autres figures, bien qu'ils n'y soient pas représentés.

L'invention s'applique également à une structure différentielle, c'est-à-dire à une structure dans laquelle des capteurs sont montés en différentiel. Ainsi, sur la figure 1D, sont représentées schématiquement, d'une part une structure 100 telle que celle décrite ci-dessus, et d'autre part une deuxième structure 200, de même type, mais en montage « tête bêche », ou différentiel.

La mesure par résonateur est bien adaptée à une miniaturisation des dimensions. Par exemple, un capteur d'accélération selon l'invention présente une surface S (surface de la masse sismique 2, en vue de dessus, ou dans le plan de la figure 1A) inférieure à 0,1 mm² ou même à 0,05 mm². Dans le cas d'un gyromètre, cette valeur supérieure est de préférence de l'ordre de 5 mm².

Un capteur résonant mesure la variation de fréquence propre d'un résonateur (type diapason ou poutre vibrante) sous l'effet d'une contrainte extérieure (force d'inertie dans le cas présent). La réponse exploitée étant une fréquence, un certain nombre d'avantages, liés au traitement des signaux électriques, en découlent, comme la possibilité de pouvoir filtrer le signal (limitation du bruit) et de pouvoir traiter l'information directement en numérique par des moyens 10 de filtrage numérique et/ou de traitement numérique du signal. En fait c'est une mesure d'une fréquence de vibration par le biais d'une mesure capacitive (i = d (CV) /dt = CdV/dt + V dC/dt, la quantité mesurée étant V dC/dt). Sur la figure 1A , les références 15, 15' désignent respectivement une électrode d'excitation et une électrode de détection. Une mesure via un MOS peut aussi être réalisée, le courant du canal étant modulé par le déplacement de la structure résonante qui constitue la grille du transistor.

Ce principe de mesure résonante permet également :

- De travailler à la résonance mécanique, c'est-à-dire avec des amplitudes de déflexion du corps vibrant 2 optimisées, et ainsi de permettre une détection capacitive plus propre.
- D'avoir une précision de mesure faiblement dépendante du bruit électrique lié à la variation de capacité.

En terme de dimensionnement, le fait de réduire notablement la section du résonateur n'est pas sans conséquence.

L'augmentation importante de la sensibilité est égale à $\Delta f/f$, où $\Delta f$ est la variation de fréquence de résonance sous l'effet d'une contrainte mécanique induite par le déplacement de la ou des masse sismique, fonction de l'accélération, dans le cas d'un accéléromètre, ou d'une vitesse de rotation dans le cas d'un gyromètre. Cette augmentation peut conduire à une augmentation notable de la non linéarité de réponse du capteur en fonction du niveau de l'accélération (cas de l'accéléromètre) ou de la vitesse de rotation (cas d'un gyromètre). On recherchera donc un bon équilibre entre la gamme de mesure, la masse de l'élément sensible 2 et la section du résonateur 4.

La diminution de section des différents éléments mécaniques dans les zones amincies peut conduire à une concentration importante des contraintes. Ces contraintes peuvent être analysées pour éviter le flambage et la rupture de ces éléments, sous l'effet d'un choc par exemple. Pour résoudre ou limiter ce problème, il est possible d'ajouter des butées mécaniques limitant le déplacement de la masse. De telles butées 12 sont représentées sur la figure 1B.

L'amincissement des zones mécaniques résulte en un déplacement de l'effort exercé par la masse sismique 2 sur chaque zone. Cet amincissement conduit en effet à décaler le centre de gravité de la masse du point d'application de la force sur le résonateur (en z, c'est à dire suivant l'épaisseur, voir figure 1B). Ce décalage peut conduire à un effet de couple parasite induisant par exemple une sensibilité aux accélérations transverses.

L'amincissement du résonateur conduit à diminuer également la capacité d'excitation et/ou de détection de la vibration. Afin de limiter la perte de sensibilité électrique il est possible de mettre l'électronique au plus proche (éventuellement par une réalisation « In-IC » du capteur) pour limiter les capacités et/ou résistances parasites susceptibles de dégrader le rapport Signal/Bruit.

Pour dimensionner un dispositif selon l'invention, on peut utiliser un logiciel de type « éléments finis » comme ANSYS ou Coventor ou tout autre logiciel d'aide à la conception comme FEMLab ou Matlab.

Dans un capteur résonant selon l'invention, la mise en oeuvre d'une technologie planaire « 3D » (c'est-à-dire avec gravure dans le plan de la masse 2, mais aussi perpendiculairement à ce plan) permet de décorréler la partie détection du capteur (poutre 4 ou diapason résonant) de la partie inertielle (masse 2). Ceci permet d'optimiser séparément ces deux éléments pour palier la diminution de sensibilité amenée par la miniaturisation des capteurs inertiels. Cette optimisation séparée est par exemple obtenue lors du procédé de réalisation, par exemple par gravures séparées des zones correspondantes, comme expliqué plus loin.

En effet la force d'inertie qui s'applique sur le résonateur est directement proportionnelle au volume de la masse sismique mise en jeu. Donc toute réduction de dimension résulte en une diminution de cette force et donc en une perte de sensibilité.

Dans le cas du résonateur de détection, la réduction de certaines dimensions (sections) du résonateur conduit à une augmentation de sensibilité, c'est-à-dire à une variation de fréquence de résonance plus importante pour une contrainte donnée. En d'autres termes, plus la section du résonateur est petite, plus la fréquence de résonance du résonateur varie en fonction de la contrainte qui y est appliquée. Pour une force extérieure donnée s'exerçant sur le résonateur, la variation de sa fréquence f de résonance sera d'autant plus importante que la section du résonateur 4 sera faible :

$$F = f_0 \sqrt{1 + 0.293 \frac{L^2}{Etl^3} F_i}$$

avec :

f : fréquence propre du résonateur sur lequel s'exerce la contrainte axiale $F_i$;
$f_0$ : la fréquence centrale sans effort ($F_i = 0$),
$F_i$ : la force d'inertie appliquée sur la poutre 4,
L, t et 1 : respectivement la longueur, l'épaisseur et la largeur de la poutre 4,
E: le module d'Young.
$\Delta f = f_{F_i \neq 0} - f_0$ ; $\Delta f / f_0$ est la susceptibilité du capteur, et augmente lorsque la section du résonateur diminue.

On cherche à réduire le terme $tl^3$ pour accroître le rapport $\Delta f/f$.

Une diminution des dimensions latérales de la poutre 2 se traduit par un gain en sensibilité. Cette diminution des dimensions latérales est néanmoins limitée par la technologie, c'est-à-dire par la résolution de la lithographie et le rapport de forme de la gravure (la largeur du motif à graver est inférieure à environ 10 fois l'épaisseur à graver pour un équipement de type DRIE ; la diminution de la largeur du résonateur tend également à faire chuter son facteur de qualité).

Pour aller encore plus loin dans la réduction de section du résonateur, on peut amincir le résonateur 2, sans toucher à la masse sismique 4 et aux zones d'ancrages ; il peut en effet être avantageux d'amincir d'autres parties mobiles du capteur comme les charnières 6, dans le cas d'un accéléromètre, ou l'axe de torsion dans le cas d'un gyromètre. Cela revient à utiliser une technologie de surface (ou technologie planaire) « 3D », ou une méthode selon l'invention, dans laquelle on amincit sélectivement certaines parties du MEMS.

Trois exemples de réalisations d'un dispositif selon l'invention sont présentés ci-dessous. Ces trois exemples peuvent en outre être combinés entre eux. Ils sont décrits dans le cas d'un accéléromètre. Dans le cas d'un gyromètre, on remplace le terme « charnière » par l'expression « axe de torsion ».

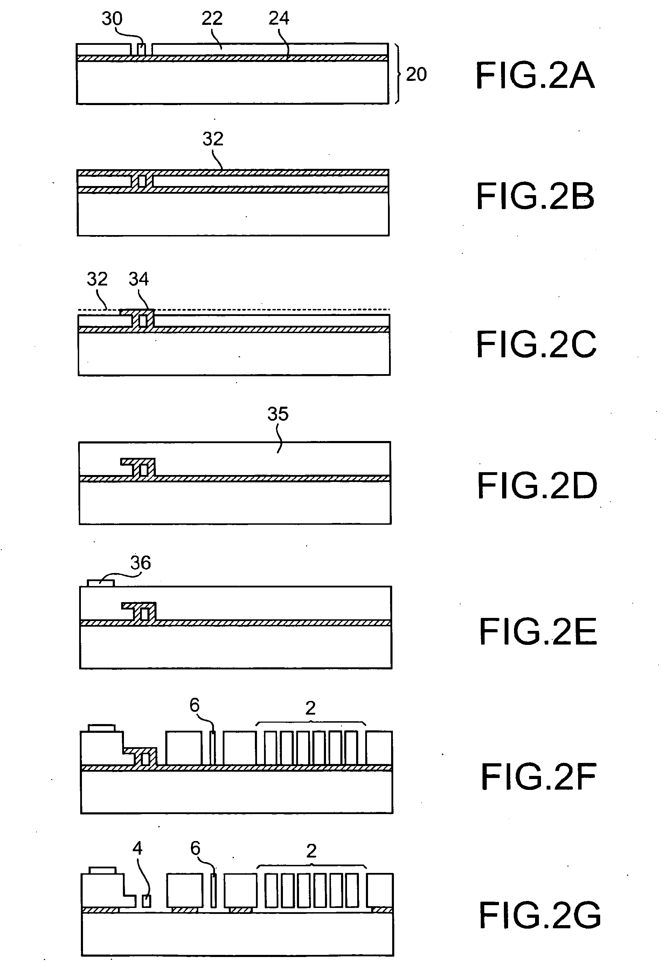

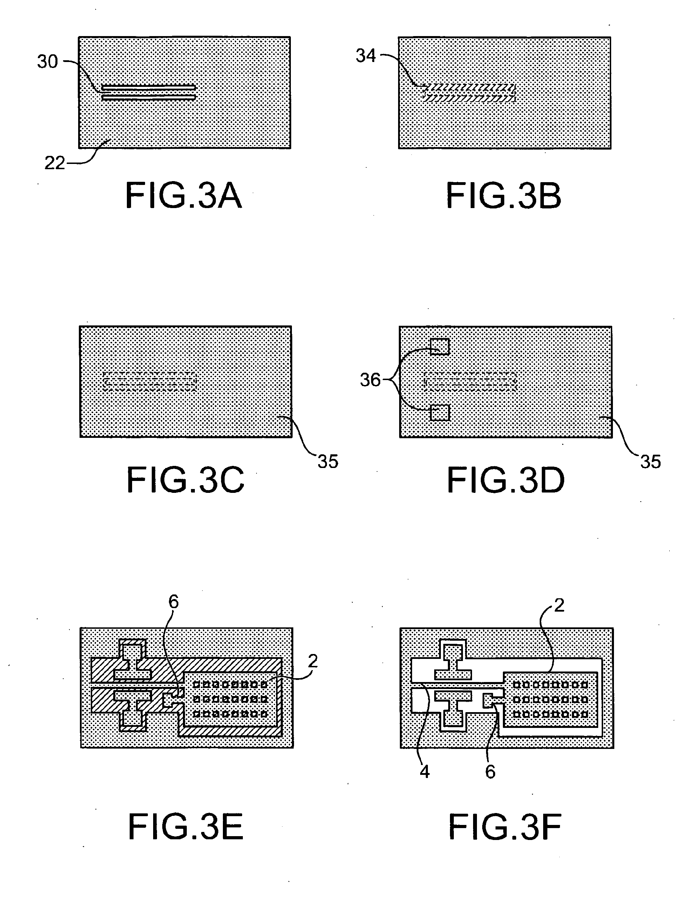

Un premier procédé va être décrit en liaison avec les figures 2A - 2G et 3A - 3F.

Ce premier procédé met en oeuvre une épitaxie de semi-conducteur (ici : Silicium ; le SiGe est un autre exemple), ce qui permet de réaliser la partie résonante dans une première épaisseur, faible, puis la masse sismique et la charnière dans une deuxième épaisseur, épitaxiée sur la première épaisseur et plus importante que cette première épaisseur.

Un substrat SOI 20 est tout d'abord sélectionné (figure 2A). Par exemple, il comporte une couche 22 de Si de 1 $\mu$m d'épaisseur pour une couche 24 d'oxyde $SiO_2$ de 0.4 $\mu$m d'épaisseur.

Il est ensuite procédé à une lithographie puis une gravure de la couche 22 de Si pour définir l'entrefer 30 du résonateur (figures 2A et 3A). Cet entrefer est donc défini dans la couche superficielle de semi-conducteur, d'épaisseur faible.

La gravure est arrêtée sur la couche 24 de $SiO_2$. On procède ensuite au dépôt d'une couche (non représentée) de $SiO_2$, par exemple d'épaisseur 2 $\mu$m, suivi d'une planarisation avec arrêt sur la couche 22 de Si, puis à un dépôt 32 de $SiO_2$, par exemple d'environ 0.4 $\mu$m d'épaisseur (figure 2B).

On procède ensuite (figures 2C et 3B) à une lithographie par gravure, dans la couche 32 de $SiO_2$, d'une protection 34 au-dessus du résonateur, avec débordement au niveau de l'électrode d'excitation/détection. Une épitaxie 35 de Silicium est ensuite réalisée (figures 2D et 3C), sur la couche superficielle 22 initiale de semi-conducteur, par exemple sur une épaisseur d'environ 3 $\mu$m, supérieure à l'épaisseur de la couche 32.

Un dépôt métallique Ti/Ni/Au, puis une lithographie par gravure, sont ensuite réalisés (figures 2E et 3D) en vue de former des contacts 36.

Il est ensuite procédé à une lithographie et à une gravure anisotrope (par exemple : DRIE) de la structure mécanique (figures 2F et 3E), avec arrêt sur la couche de dioxyde $SiO_2$ 24. Cette étape permet de réaliser, au cours de la même opération, la masse sismique et la charnière 6, sur une même épaisseur de matériau.

Le dispositif est enfin libéré par gravure HF (humide ou vapeur) de la couche 24 (figures 2G et 3F).

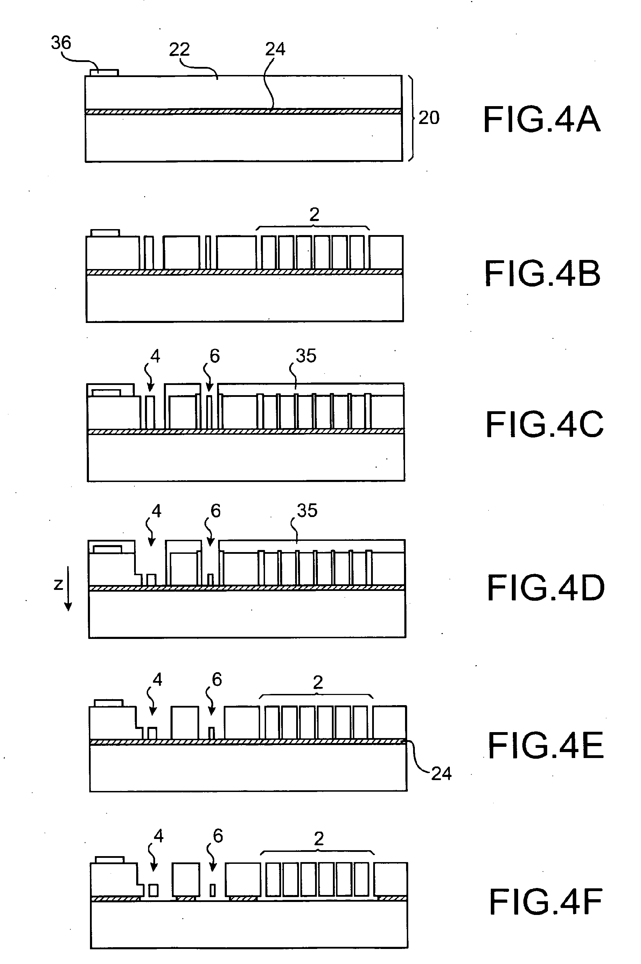

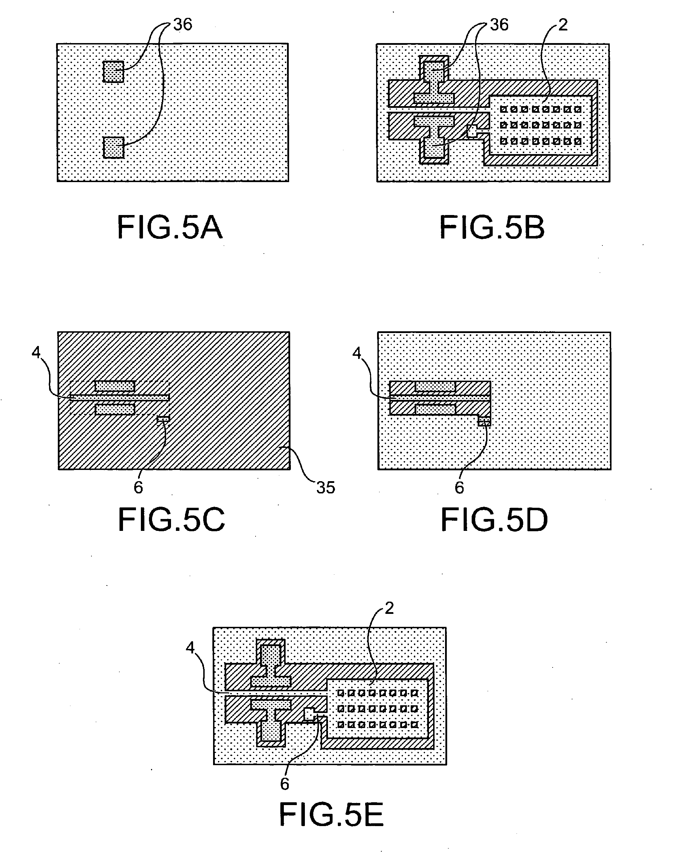

Un deuxième procédé selon l'invention met en oeuvre un amincissement du résonateur 4 et de la charnière 6 par gravure (figures 4A - 4F et 5A - 5E).

Un substrat SOI 20 est tout d'abord sélectionné (figure 4A). Par exemple, il comporte une couche 22 de Si de 4 $\mu$m d'épaisseur pour une couche 24 d'oxyde $SiO_2$ de 0.4 $\mu$m d'épaisseur.

Un dépôt métallique Ti/Ni/Au puis une litho-gravure sont ensuite réalisés en vue de former des contacts 36 (figures 4A et 5A).

Il est ensuite procédé à une lithographie et à une gravure DRIE de la structure mécanique (figures 4B et 5B), avec arrêt sur la couche de dioxyde $SiO_2$ 24. Cette étape permet de réaliser, au cours de la même opération et dans une même épaisseur de matériau, d'une part la masse sismique 2, et d'autre part les zones dans lesquelles seront réalisées la charnière 6 et la partie résonante 4.

Après dépôt d'une couche de résine 35, il est procédé à une lithographie (figures 4C et 5C), ce qui permet de réaliser une ouverture du résonateur 4, avec débordement au niveau de l'électrode d'excitation/détection et ouverture sur la charnière 6.

Les zones de la charnière 6 et du résonateur 4 sont amincies, par exemple gravées (par RIE ou DRIE par exemple) (figures 4D et 5D). Puis la résine 35 est éliminée (figure 4E).

Le dispositif est libéré par gravure HF (humide ou vapeur) de la couche 24 (figures 4F et 5E).

Dans ce procédé, les zones charnière et résonante ont des épaisseurs identiques car elles sont gravées en profondeur, suivant l'axe z, au cours d'une même étape, tandis que les motifs de la zone formant masse sismique ne sont quant à eux pas gravés suivant cette direction.

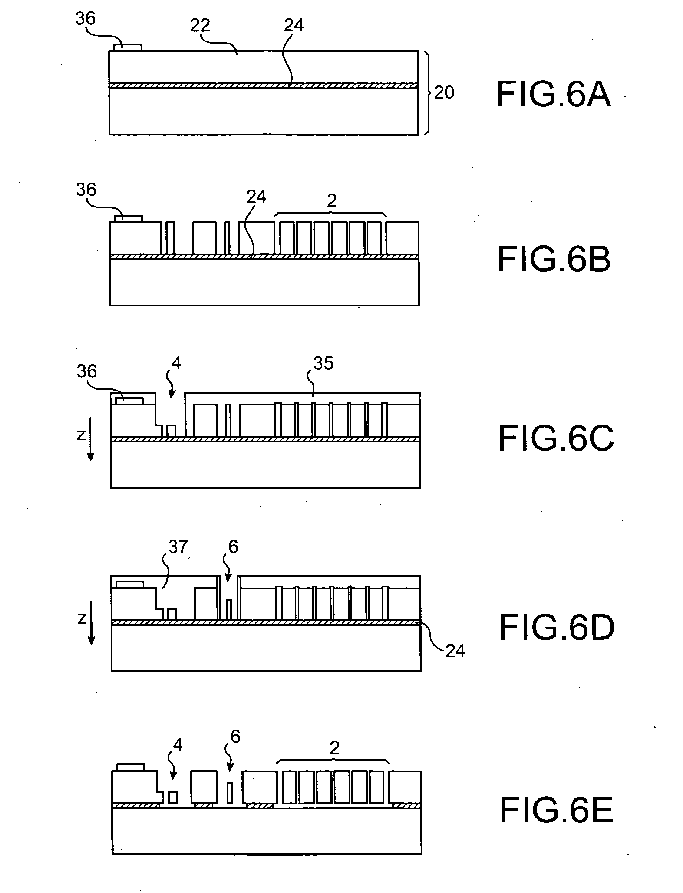

Un troisième procédé selon l'invention est une variante du deuxième mode de réalisation, avec, en outre, un amincissement différentiel du résonateur 4 et de la charnière 6 (ou d'une autre partie mécanique)Un substrat SOI 20 est tout d'abord sélectionné (figure 6A). Par exemple, il comporte une couche 22 de Si de 4 $\mu$m d'épaisseur pour une couche 24 d'oxyde $SiO_2$ de 0.4 $\mu$m d'épaisseur.

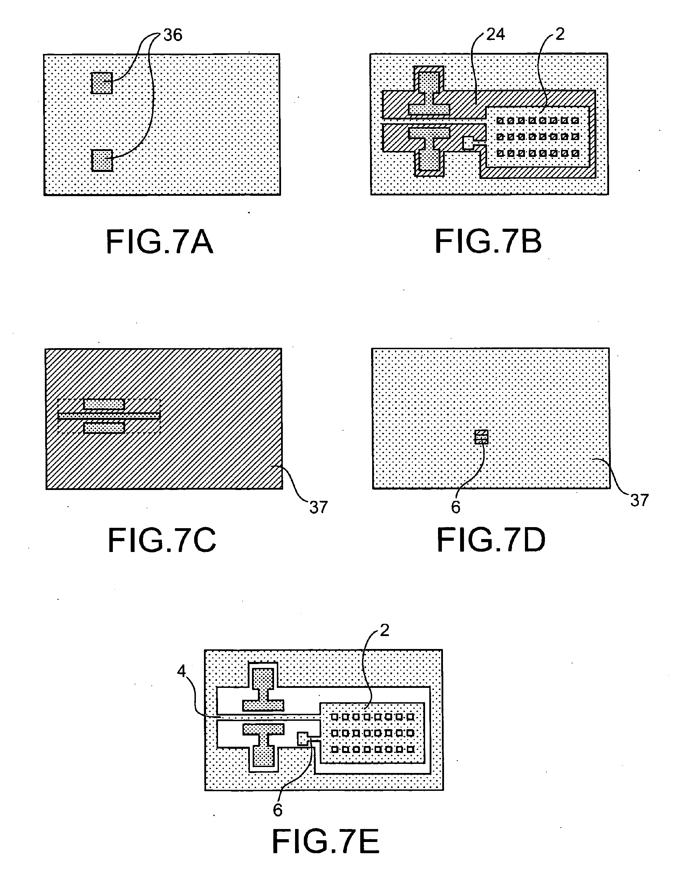

Un dépôt métallique Ti/Ni/Au puis une litho-gravure sont ensuite réalisés en vue de former des contacts 36 (figures 6A et 7A).

Il est ensuite procédé à un dépôt de résine, à une lithographie et à une gravure (RIE ou DRIE) de la structure mécanique (figures 6B et 7B), avec arrêt sur la couche de dioxyde $SiO_2$ 24. Cette étape permet de réaliser, au cours de la même opération et dans une même épaisseur de matériau, d'une part la masse sismique 2, et d'autre part les zones dans lesquelles seront réalisées la charnière 6 et la partie résonante 4.

Cette étape permet donc de graver les motifs de la zone formant masse sismique, de la zone formant résonateur et de la zone de charnières. Les motifs de ces deux dernières zones vont ensuite pouvoir être gravées en profondeur, selon l'axe z (figures 6C et 6D), mais de manière séparée pour pouvoir contrôler leur épaisseur finale relative.

Ainsi, après un dépôt de résine 35 (figure 6C), on réalise, par lithographie, une ouverture du résonateur, avec débordement au niveau de l'électrode d'excitation/détection. On procède à une gravure (RIE ou DRIE) du résonateur selon l'axe z, puis à une élimination de la résine 35.

Ensuite (figure 6D), après un autre dépôt de résine 37, une ouverture par lithographie est réalisée au niveau de la charnière 6. Là encore, il est procédé à une gravure DRIE selon l'axe z, mais de la charnière 6, puis à une élimination de la résine 37.

Le dispositif est libéré par gravure HF (humide ou vapeur) de la couche 24 (figures 6E et 7E).

Dans ce troisième procédé, les zones charnière et résonante ont des épaisseurs différentes l'une de l'autre, et différentes de l'épaisseur de la zone sismique, car elles sont gravées en profondeur, suivant l'axe z, au cours d'étapes différentes, tandis que les motifs de la zone formant masse sismique ne sont quant à eux pas gravés suivant cette direction.

Le premier mode de réalisation, bien qu'un peu plus complexe (il met en oeuvre des étapes supplémentaires de planarisation et d'épitaxie), permet d'optimiser la sensibilité électrique du résonateur électromécanique (optimisation du rapport signal/bruit par accroissement des capacités utiles). En effet, l'entrefer entre le résonateur et les électrodes d'excitation/détection est réalisé directement dans une partie très fine de silicium. La gravure de l'entrefer se faisant sur une épaisseur fine, on peut atteindre une forte résolution d'usinage. Dans les deux autres modes de réalisation, résonateurs et entrefers sont réalisés sur une forte épaisseur de silicium, limitant la finesse de l'usinage, avant d'être amincis. Par exemple, en estimant un « aspect ratio » de 10 pour la gravure DRIE, on pourra obtenir un entrefer de 0.2 $\mu$m sur 2 $\mu$m de silicium, alors que l'on ne pourra pas descendre en dessous de 2 $\mu$m d'entrefer pour 20 $\mu$m de silicium. L'amincissement après gravure de l'entrefer conduit de plus à dégrader encore l'espace inter-électrodes.

L'invention met en oeuvre des zones d'épaisseurs différentes dans un capteur. Un capteur selon l'invention peut être réalisé par usinage du silicium ou d'un matériau semi-conducteur dans les 3 dimensions.

Un résonateur selon l'invention, obtenu par usinage 3D dans un matériau semi-conducteur, est particulièrement bien adapté pour un gyromètre à détection par résonateur. Le principe d'un tel gyromètre est indiqué dans le document FR-2 874 257, qui est également représenté schématiquement en figure 8. Il comporte un support, non représenté, et 2 masses sismiques 120, 120' qui sont mobiles dans le plan (X, Y) du support, et notamment qui peuvent vibrer. Ces deux masses sont couplées par des moyens de liaison, eux aussi mobiles par rapport au support. Dans le cadre représenté, deux bras de liaison 140, 140', ici parallèles, sont reliés aux masses mobiles par l'intermédiaire de moyens 160, 160' ayant une flexibilité suffisante pour permettre les mouvements relatifs des deux masses 120, 120' par rapport aux bras 140, 140', tout en étant suffisamment rigides pour transmettre les mouvements des masses 120, 120' aux bras 140, 140'. De préférence, les bras de liaison 140, 140' et les moyens flexibles, ou bras de flexion, 160, 160' forment un cadre rectangulaire ; les moyens flexibles 160, 160' peuvent par exemple être des ressorts de flexion ou une languette d'attache. Des moyens sont prévus pour mettre les masses 120, 120' en vibration dans le plan (X, Y) du support, par exemple des peignes d'excitation 180, 180' s'imbriquant dans une ou les deux faces de chaque masse mobile 120, 120'. Les peignes 180, 180' engendrent par l'intermédiaire de forces électrostatiques un déplacement en va-et-vient de chaque masse 120, 120' dans une première direction X, ici de gauche à droite de la feuille; d'autres moyens peuvent être envisagés, comme une excitation électromagnétique.

En particulier, les masses 120, 120' sont excitées, de préférence à la résonance ou au voisinage de la résonance, par le biais de forces électrostatiques appliquées par l'intermédiaire des structures en peignes « inter digités » 180, 180' l'ensemble des masses 120, 120' et moyens de liaison 140, 140', 160, 160' forme ainsi un premier résonateur d'excitation 200. Le fonctionnement à la résonance permet en effet d'obtenir une forte amplitude de déplacement, et un grand facteur de qualité, augmentant d'autant la sensibilité du gyromètre. Avantageusement, la vibration des masses 120, 120' est en opposition de phase, c'est-à-dire que leurs mouvements sont en direction opposée à chaque instant : la distance séparant les deux masses 120, 120' est variable, cette variation étant tolérée par les moyens flexibles 160, 160'. Ceci permet la détection par des deuxièmes résonateurs.

Lorsque le gyromètre subit un déplacement angulaire autour d'un axe Z perpendiculaire au support, une force de Coriolis est générée sur chaque masse 120, 120', perpendiculaire aux axes X et Z et donc ici dans la direction verticale **Y** de la feuille, issue de la composition de la vibration forcée par les éléments 180, 180' avec la vitesse angulaire $\Omega$. Les forces de Coriolis sont transmises aux bras 140, 140' par les moyens flexibles 160, 160' si un deuxième résonateur 220 est couplé à un bras 140, il subit lui aussi une contrainte issue de la force de Coriolis. Cette contrainte déplace la fréquence de résonance du résonateur de détection 220. La vitesse de rotation $\Omega$ autour de l'axe Z est alors déduite du déplacement en fréquence mesuré. En particulier, le résonateur 220 est excité et asservi de préférence sur son pic de résonance ou à son voisinage ; un système électronique numérique permet de remonter aisément à la fréquence de résonance à chaque instant. Le résonateur 220 peut par exemple être sous la forme d'une poutre vibrante telle que schématisée sur la figure 8, dont une première extrémité est reliée au bras de liaison 140 et l'autre est ancrée au substrat par tout moyen 240 connu. Selon un mode de réalisation préféré, le résonateur 220 est excité à la résonance de façon capacitive par des électrodes fixes qui servent également à la détection. On peut également avoir une électrode de détection 260 dissociée de l'électrode d'excitation 280. Une excitation électromagnétique est également envisageable, tout comme une détection par jauge piézoélectrique. Afin d'augmenter la détection possible et la sensibilité du résonateur 220, avantageusement, sur chaque bras 140, 140' est localisé un axe de torsion 300, 300' destiné à transformer les forces de Coriolis s'exerçant au niveau des masses 120, 120' en un couple de forces autour de cet axe de torsion 300, 300', par un effet de bras de levier qui permet d'exercer la contrainte la plus importante possible sur le résonateur. Chacun des axes de torsion est ainsi rattaché à une extrémité au support par un ancrage 320, 320' et à l'autre extrémité au bras de liaison 140, 140', 160, 160', vers le centre de la structure 200 pour limiter les dérives en température du gyromètre.

D'autres modes de réalisation sont possibles, comme illustré sur les figures 4A - 4D du document FR-2874257, par exemple deux résonateurs sur un même bras de liaison 140 (figure 4A), ou situés du même côté d'un axe du dispositif mobile défini par les axes de torsion (figure 4B), ou bien encore avec des résonateurs de type diapason (figure 4C), ou bien encore avec des résonateurs disposés comme en figure 4D de ce même document.

Pour tous ces dispositifs, l'invention permet de réaliser un ou des résonateurs d'épaisseur ou de section inférieure à celle de la ou des masses sismiques.

Les forces mises en jeu pour ce type de composant sont extrêmement faibles à l'échelle des micro-capteurs (forces de Coriolis). L'utilisation des technologies de surface classiques conduit à une sensibilité très réduite, même en poussant la technologie à ses limites, en essayant de réduire la largeur du résonateur au maximum (limites imposées par la lithographie et la DRIE). La possibilité de réduire la section du résonateur par un usinage 3D permet de viser des sensibilités très élevées difficilement atteignables par les autres concepts de gyromètres à détection capacitive.

L'invention permet d'avoir des capteurs inertiels (accéléromètres ou gyromètres) de très bonnes performances (sensibilité) pour des dimensions très réduites.

## Revendications

1. Capteur résonant MEMS de type de surface, comportant un résonateur (4) à excitation dans un plan, **caractérisé en ce qu'**il comporte :

   - une première zone (2), dite zone épaisse, présentant une première épaisseur ($E_1$), formant masse sismique,
   - une deuxième zone (4), mince, présentant une deuxième épaisseur ($E_2$), inférieure à la première, pour la détection.

2. Capteur selon la revendication 1, de type accéléromètre, la première zone (2) présentant une surface S inférieure à 0,1 mm$^2$

3. Capteur selon la revendication 1, de type gyromètre, la première zone (2) présentant une surface S inférieure à 5 mm$^2$.

4. Capteur selon l'une des revendications 1 à 3, la première et la deuxième zones étant formées dans la couche superficielle (22) de semi-conducteur d'un substrat SOI (20).

5. Capteur selon l'une des revendications 1 à 4, comportant une troisième zone (6) formant charnière ou axe de torsion.

6. Capteur selon la revendication 5, la troisième zone ayant une épaisseur comprise entre celle de la première zone et celle de la deuxième zone.

7. Capteur selon la revendication 5, la troisième zone ayant une épaisseur égale à celle de la première zone.

8. Capteur selon la revendication 5, la troisième zone ayant une épaisseur égale à celle de la deuxième zone.

9. Capteur selon l'une des revendications 1 à 8, comportant en outre des butées mécaniques (12) limitant le déplacement de la masse sismique (2).

10. Capteur selon l'une des revendications 1 à 9, comportant en outre des moyens (10) de détection.

11. Capteur selon la revendication 10, les moyens (10) de détection comportant des moyens de filtrage numérique et/ou de traitement numérique du signal.

12. Dispositif de détection de surface, comportant un premier résonant (100) et un deuxième capteur résonant (200), chacun selon l'une des revendication 1 à 11, à montage différentiel.

13. Procédé de réalisation d'un capteur résonant MEMS, du type de surface, comportant un résonateur à excitation dans le plan, ce procédé comportant :

    - la formation d'une zone épaisse, présentant une première épaisseur ($E_1$), formant masse sismique,
    - la formation d'une zone mince, présentant une deuxième épaisseur ($E_2$), inférieure à la première, pour la détection.

14. Procédé selon la revendication 13, la zone épaisse et la zone mince étant formées par gravure d'une couche (22) de matériau semi-conducteur, suivant 3 dimensions.

15. Procédé selon l'une des revendications 13 ou 14, les zones mince et épaisse étant formée par gravure d'une couche superficielle de matériau semi-conducteur d'un substrat SOI, suivant une direction (z) perpendiculaire à un plan principal de ce substrat SOI.

16. Procédé selon l'une des revendications 13 à 15, comportant en outre la formation d'une troisième zone (6), dite zone charnière ou axe de torsion, d'épaisseur comprise entre celle de la première zone et celle de la deuxième zone.

17. Procédé selon la revendication 16, la deuxième zone et la troisième zones étant obtenues par étapes de gravure indépendantes l'une de l'autre.

18. Procédé selon l'une des revendications 13 à 17, comportant en outre la formation d'une troisième zone (6), dite zone charnière ou axe de torsion, d'épaisseur égale à celle de la première zone.

19. Procédé selon la revendication 18, la première et la deuxième zones étant obtenues au cours d'une même étape de gravure, indépendante de l'étape de gravure permettant de réaliser la troisième zone.

**20.** Procédé selon l'une des revendications 13 à 19, comportant en outre la formation d'une troisième zone (6), dite zone charnière ou axe de torsion, d'épaisseur égale à celle de la deuxième zone.

**21.** Procédé selon la revendication 20, la deuxième zone et la troisième zones étant obtenues au cours d'une même étape de gravure, indépendante de l'étape de gravure permettant de réaliser la première zone.

**22.** Procédé selon l'une des revendications 13 à 21, la zone mince étant réalisée dans une couche superficielle (22) de semi-conducteur, la zone épaisse étant réalisée dans une couche de semi-conducteur (35) épitaxiée sur ladite couche superficielle et dans cette couche superficielle.

**Claims**

**1.** Surface-type MEMS resonant sensor, comprising a resonator (4) with excitation in a plane, **characterised in that** it comprises:

   - a first, so-called thick area (2), having a first thickness ($E_1$), forming a seismic mass,
   - a second, thin area (4), having a second thickness ($E_2$), lower than the first, for detection.

**2.** Sensor according to claim 1, of the accelerometer type, **characterised in that** the first area (2) has a surface S smaller than 0.1 mm$^2$,

**3.** Sensor according to claim 1, of the gyrometer type, **characterised in that** the first area (2) has a surface S smaller than 5 mm$^2$,

**4.** Sensor according to one of claims 1 to 3, **characterised in that** the first and second areas are formed in the superficial semiconductor layer (22) of a SOI substrate (20).

**5.** Sensor according to one of claims 1 to 4, **characterised in that** it comprises a third area (6) forming a hinge or a torsion axis.

**6.** Sensor according to claim 5, **characterised in that** the third area has a thickness between that of the first area and that of the second area.

**7.** Sensor according to claim 5, **characterised in that** the third area has a thickness equal to that of the first area.

**8.** Sensor according to claim 5, **characterised in that** the third area has a thickness equal to that of the second area.

**9.** Sensor according to one of claims 1 to 8, **characterised in that** it also comprises mechanical stops (12) limiting the movement of the seismic mass (2).

**10.** Sensor according to one of claims 1 to 9, **characterised in that** it also comprises detection means (10).

**11.** Sensor according to claim 10, **characterised in that** the detection means (10) comprise means for digital filtering and/or digital processing of the signal.

**12.** Surface detection device, **characterised in that** it comprises a first resonant sensor (100) and a second resonant sensor (200), each according to one of claims 1 to 11, with differential assembly.

**13.** Method for producing a surface-type MEMS resonant sensor, **characterised in that** it comprises a resonator with excitation in the plane, which method comprises:

   - the formation of a thick area, having a first thickness ($E_1$), forming a seismic mass,
   - the formation of a thin area, having a second thickness ($E_2$), lower than the first, for detection.

**14.** Method according to claim 13, **characterised in that** the thick area and the thin area are formed by etching a layer (22) of semiconductor material in three dimensions.

**15.** Method according to one of claims 13 or 14, **characterised in that** the thin and thick areas are formed by etching a surface semiconductor material layer of a SOI substrate, in a direction (z) perpendicular to a main plane of said SOI substrate.

**16.** Method according to one of claims 13 to 15, **characterised in that** it also comprises the formation of a third area (6), called a hinge or torsion axis area, with a thickness between that of the first area and that of the second area.

**17.** Method according to claim 16, **characterised in that** the second area and third area are obtained by etching steps independent of one another.

**18.** Method according to one of claims 13 to 17, **characterised in that** it also comprises the formation of a third area (6), called a hinge or torsion axis area, with a thickness equal to that of the first area.

**19.** Method according to claim 18, **characterised in that** the first and second areas are obtained during a single etching step, independent of the etching step making it possible to produce the third area.

20. Method according to one of claims 13 to 19, **characterised in that** it also comprises the formation of a third area (6), called a hinge or torsion axis area, with a thickness equal to that of the second area.

21. Method according to claim 20, **characterised in that** the second and third areas are obtained in a single etching step, independent of the etching step making it possible to produce the first area.

22. Method according to one of claims 13 to 21, **characterised in that** the thin area is produced in a superficial semiconductor layer (22), and the thick area is produced in a semiconductor layer (35) epitaxially grown on said superficial layer and in said superficial layer.


**Patentansprüche**

1. Resonanter MEMS-Sensor des Oberflächentyps mit einem Resonator (4) mit Erregung in einer Ebene, **dadurch gekennzeichnet, dass** er umfasst:

   - eine erste Zone (2), dicke Zone genannt, mit einer eine seismische Masse bildenden ersten Dicke ($E_1$),
   - eine zweite Zone (4) mit einer zweiten Dicke ($E_2$), dünner als die erste, für die Detektion.

2. Sensor nach Anspruch 1 vom Typ Beschleunigungsmesser, bei dem die erste Zone (2) eine Oberfläche S kleiner als 0,1 mm² aufweist.

3. Sensor nach Anspruch 1 vom Typ Gyrometer, bei dem die erste Zone (2) eine Oberfläche S kleiner als 5 mm² aufweist.

4. Sensor nach einem der Ansprüche 1 bis 3, bei dem die erste und die zweite Zone in der Halbleiter-Oberflächenschicht (22) eines SOI-Substrats (20) ausgebildet sind.

5. Sensor nach einem der Ansprüche 1 bis 4 mit einer dritten Zone (6), ein Gelenk oder eine Torsionsachse bildend.

6. Sensor nach Anspruch 5, bei dem die dritte Zone eine Dicke aufweist, die zwischen derjenigen der ersten Zone und derjenigen der zweiten Zone enthalten ist.

7. Sensor nach Anspruch 5, bei dem die dritte Zone eine Dicke gleich derjenigen der ersten Zone aufweist.

8. Sensor nach Anspruch 5, bei dem die dritte Zone eine Dicke gleich derjenigen der zweiten Zone aufweist.

9. Sensor nach einem der Ansprüche 1 bis 8, außerdem mechanische Anschläge (12) zur Begrenzung der Verschiebung der seismischen Masse (2) umfassend.

10. Sensor nach einem der Ansprüche 1 bis 9, außerdem Detektionsmittel (10) umfassend.

11. Sensor nach Anspruch 10, bei dem die Detektionsmittel digitale Filter- und/oder digitale Verarbeitungsmittel des Signals umfassen.

12. Oberflächendetektionsvorrichtung mit einem ersten Resonator (100) und einem zweiten Resonator (200) jeweils nach einem der Ansprüche 1 bis 11 in differenzieller Anordnung.

13. Verfahren zur Herstellung eines resonanten MEMS-Sensors des Oberflächentyps mit einem Resonator mit Erregung in der Ebene, wobei dieses Verfahren umfasst:

   - die Bildung einer dicken Zone mit einer eine seismische Masse bildenden ersten Dicke ($E_1$),
   - die Bildung einer dünnen Zone mit einer zweiten Dicke ($E_2$), dünner als die erste, für die Detektion.

14. Verfahren nach Anspruch 13, bei dem die dicke Zone und die dünne Zone durch dreidimensionale Ätzung einer Schicht (22) aus Halbleitermaterial gebildet werden.

15. Verfahren nach einem der Ansprüche 13 oder 14, bei dem die dünne und die dicke Zone durch Ätzung einer Halbleitermaterial-Oberflächenschicht eines SOI-Substrats gemäß einer zu einer Hauptrichtung dieses SOI-Substrats senkrechten Richtung (z) gebildet werden.

16. Verfahren nach einem der Ansprüche 13 bis 15, außerdem die Bildung einer dritten Zone (6) umfassend, Gelenk- oder Torsionsachsenzone genannt, deren Dicke zwischen derjenigen der ersten Zone und derjenigen der zweiten Zone enthalten ist.

17. Verfahren nach Anspruch 16, bei dem die dritte Zone durch voneinander unabhängige Ätzschritte realisiert wird.

18. Verfahren nach einem der Ansprüche 13 bis 17, außerdem die Bindung einer dritten Zone (6) umfassend, Gelen- oder Torsionsachsenzone genannt, deren Dicke gleich der derjenigen ersten Zone ist.

**19.** Verfahren nach Anspruch 18, bei dem die erste und die zweite Zone während eines Ätzschritts realisiert werden, der unabhängig ist von dem Schritt zur Realisierung der dritten Zone.

**20.** Verfahren nach einem der Ansprüche 13 bis 19, außerdem die Bildung einer dritten Zone (6) umfassend, Gelenk- oder Torsionsachsenzone genannt, deren Dicke gleich der derjenigen zweiten Zone ist.

**21.** Verfahren nach Anspruch 20, bei dem die zweite und die dritte Zone während eines Ätzschritts realisiert werden, der unabhängig ist von dem Schritt zur Realisierung der ersten Zone.

**22.** Verfahren nach einem der Ansprüche 13 bis 21, bei dem die dünne Zone in einer Halbleiter-Oberflächenschicht (22) realisiert wird, wobei die dicke Zone in einer auf die genannte Oberflächenschicht epitaxierten Halbfeiterschicht (35) und in dieser Oberflächensicht realisiert wird.

FIG.1A

FIG.1B

FIG.1C

FIG.1D

FIG.2A

FIG.2B

FIG.2C

FIG.2D

FIG.2E

FIG.2F

FIG.2G

FIG.3A

FIG.3B

FIG.3C

FIG.3D

FIG.3E

FIG.3F

36    22    24

20    FIG.4A

2

FIG.4B

4    6    35

FIG.4C

4    6    35

z

FIG.4D

4    6    2

FIG.4E

24

4    6    2

FIG.4F

FIG.5A

FIG.5B

FIG.5C

FIG.5D

FIG.5E

FIG.6A

FIG.6B

FIG.6C

FIG.6D

FIG.6E

FIG.7A

FIG.7B

FIG.7C

FIG.7D

FIG.7E

FIG.8

FIG.9A

FIG.9B

## RÉFÉRENCES CITÉES DANS LA DESCRIPTION

**Documents brevets cités dans la description**

- FR 2763694

- FR 2874257

**Littérature non-brevet citée dans la description**

- **M.AIKELE et al.** Resonant accelerometer with self test. *Sensors and Actuators,* 2001, vol. A92, 161-167

- **C.HÉROLD.** from micro- to nanosytems: mechanical sensors go nano. *Journal of Micromechanics and Microengineering,* 2004, vol. 14, S1-S11